(19) Europäisches Patentamt

European Patent Office

Office européen des brevets

(11) **EP 1 415 366 B1**

(12) **FASCICULE DE BREVET EUROPEEN**

(45) Date de publication et mention
de la délivrance du brevet:
**29.12.2004 Bulletin 2004/53**

(51) Int Cl.⁷: **H01Q 7/00**, H01Q 1/22,
G07C 9/00, G06K 7/08,
G01V 3/00

(21) Numéro de dépôt: 02772470.7

(22) Date de dépôt: **30.07.2002**

(86) Numéro de dépôt international:
**PCT/FR2002/002747**

(87) Numéro de publication internationale:
**WO 2003/012920 (13.02.2003 Gazette 2003/07)**

(54) **ANTENNES DU GENRE BOUCLE**

SCHLEIFENANTENNE

LOOP-TYPE ANTENNA

(84) Etats contractants désignés:
**AT BE BG CH CY CZ DE DK EE ES FI FR GB GR
IE IT LI LU MC NL PT SE SK TR**

(30) Priorité: **30.07.2001 FR 0110201**

(43) Date de publication de la demande:
**06.05.2004 Bulletin 2004/19**

(73) Titulaire: **Pygmalyon
69100 Villeurbanne (FR)**

(72) Inventeurs:
• **BERNARD, Tony
F-69100 Villeurbanne (FR)**

• **MARTIN, Jean-Marc
F-98320 Saint Leu La Foret (FR)**

(74) Mandataire: **Maureau, Philippe et al
Cabinet GERMAIN & MAUREAU,
BP 6153
69466 Lyon Cedex 06 (FR)**

(56) Documents cités:

| | |
|---|---|
| **EP-A- 0 615 217** | **EP-A- 0 897 200** |
| **WO-A-00/22580** | **FR-A- 2 785 094** |
| **GB-A- 2 295 926** | **US-A- 2 400 551** |

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Printed by Jouve, 75001 PARIS (FR)

**Description**

La présente invention concerne des antennes du genre "boucle", utilisées comme balises d'émission/réception, notamment dans un système d'identification de type radio-fréquence, utilisant des étiquettes électroniques. Cette invention s'applique, plus particulièrement, à des antennes utilisables dans un système détectant le passage de personnes, d'animaux ou d'objets de taille importante, portant individuellement des étiquettes électroniques qui permettent leur identification au moment de la détection de ce passage ; ainsi, une application spécifique de l'invention est l'identification et la détection automatiques de participants à des évènements sportifs, en particulier pour établir de façon automatique, instantanée et certaine le chronométrage et le classement des participants à une épreuve sportive se déroulant sur un parcours préétabli, avec passage en des points intermédiaires et/ou sur une ligne de départ ou d'arrivée prédéterminés, notamment des épreuves dans lesquelles les concurrents sont nombreux et, par conséquent, difficiles à identifier individuellement par les procédés habituels, très empiriques.

Les antennes "boucle" sont le plus souvent utilisées comme antennes réceptrices, pour capter un champ électrique et/ou magnétique, en étant associés à un récepteur amplificateur du signal reçu.

Ces antennes sont aussi utilisées comme antennes émettrices, pour créer un champ magnétique dans certaines applications bien particulières. En effet, à courte distance d'une boucle de courant, seul le champ magnétique reste important, le champ électrique étant, lui, très faible.

Il est rappelé qu'une telle antenne "boucle", utilisée pour créer un champ magnétique, est constituée par un simple fil électriquement conducteur, qui est bouclé sur un ou plusieurs tours, et qui est parcouru par un courant d'intensité et de phase constantes sur toute la longueur du fil. Cette antenne peut posséder une configuration de boucle circulaire, carrée ou rectangulaire.

Dans le cas d'une antenne "boucle" rectangulaire, le champ magnétique H sur un axe perpendiculaire au plan de la boucle, et passant par le centre de celle-ci, est donné par la formule :

$$H \simeq n\,I.\frac{ab}{p\sqrt{a^2+b^2+h^2}}.\left[\frac{1}{a^2+h^2}+\frac{1}{b^2+h^2}\right]$$

dans laquelle :

- n est le nombre de tours de fil de l'antenne,
- I est l'intensité du courant dans ce fil,
- 2a est la largeur du rectangle formé par la boucle,
- 2b est la longueur de ce rectangle,
- h est la distance du point considéré au centre dudit rectangle.

Lorsque la distance h devient grande devant a, ou a et b, la formule précédente se simplifie et devient :

$$H = n\,I.\frac{2\,ab}{ph^3}$$

ou

$$H = n\,I.\frac{S}{2\,p\,h^3}$$

S désignant la surface de la boucle (soit 4 ab).

On voit alors que le champ magnétique est proportionnel au courant total n I passant par la boucle, et à la surface S de la boucle, et que ce champ magnétique H est inversement proportionnel à $h^3$, donc décroît très vite lorsque la distance h augmente, c'est-à-dire lorsque l'on s'éloigne du plan de la boucle, tout en restant sur l'axe central de celle-ci.

On remarque aussi que la fréquence f du courant parcourant la boucle n'intervient pas directement dans les formules précédentes. En fait, cette fréquence intervient par le fait que la longueur du fil de la boucle doit être petite devant la longueur d'onde λ. En général, cette longueur de fil est choisie inférieure à λ/4, de façon à ce que le courant soit constant.

Le plus souvent, on réalise ce type d'antenne "boucle" en assimilant le fil bouclé, de longueur donnée, à une inductance de valeur L et de résistance R, et on lui associe une capacité C de façon à créer un circuit résonant de type R, L, C, avec $LC\omega^2 = 1$ ($\omega$ étant égal à $2\pi f$), de telle sorte que l'intensité I du courant dans le fil soit maximale, car uniquement liée à la résistance R du circuit. Cette résistance R est elle-même composée de la résistance du fil lui-même, des résistances de connexion et d'une résistance additionnelle qui permet de moduler le coefficient de surtension $Q = L\omega/R$, mais elle dissipe alors une puissance $R (n\,I)^2$ non négligeable.

Un autre facteur restrictif à la réalisation de ce type d'antenne "boucle" est la capacité propre du fil formant la boucle. En effet, lorsqu'on augmente la longueur du fil, sa capacité propre devient importante et l'on s'approche de la résonance propre du fil, ce qui est la limite acceptable pour la structure résonante.

Ainsi, la structure de boucle d'une antenne émettrice de champ magnétique actuelle se caractérise par des dimensions faibles, compte tenu des facteurs limitatifs évoqués ci-dessus. Cette structure reste aussi assez sensible à l'environnement extérieur car, son principe étant celui d'un circuit résonant, de nombreuses perturbations sont à craindre sur le circuit lui-même : effet de la température par exemple lors de l'échauffement de la résistance additionnelle ; effet d'un élément métallique proche de la boucle ; influence des composants eux-mêmes, tels que les condensateurs, ceux-ci pouvant être le siège de tensions élevées et variant avec la température.

En conséquence, les antennes "boucle" actuelles se trouvent en pratique limitées, dans leurs applications, à une utilisation très locale, c'est-à-dire qu'elles créent un champ magnétique significatif dans un volume dont la base ne dépasse pas la surface de la boucle, et dont la hauteur est comprise entre quelques dizaines de centimètres et environ un mètre au maximum.

Or le domaine de l'identification par radio-fréquence, évoqué en introduction, c'est-à-dire la détection et l'identification de porteurs d'une étiquette électronique dite "intelligente", qui répond à la sollicitation d'une balise fixe lorsque le porteur passe à proximité de ladite balise, est fortement demandeur de systèmes possédant un volume important dans lequel les étiquettes électroniques peuvent "dialoguer" avec la balise.

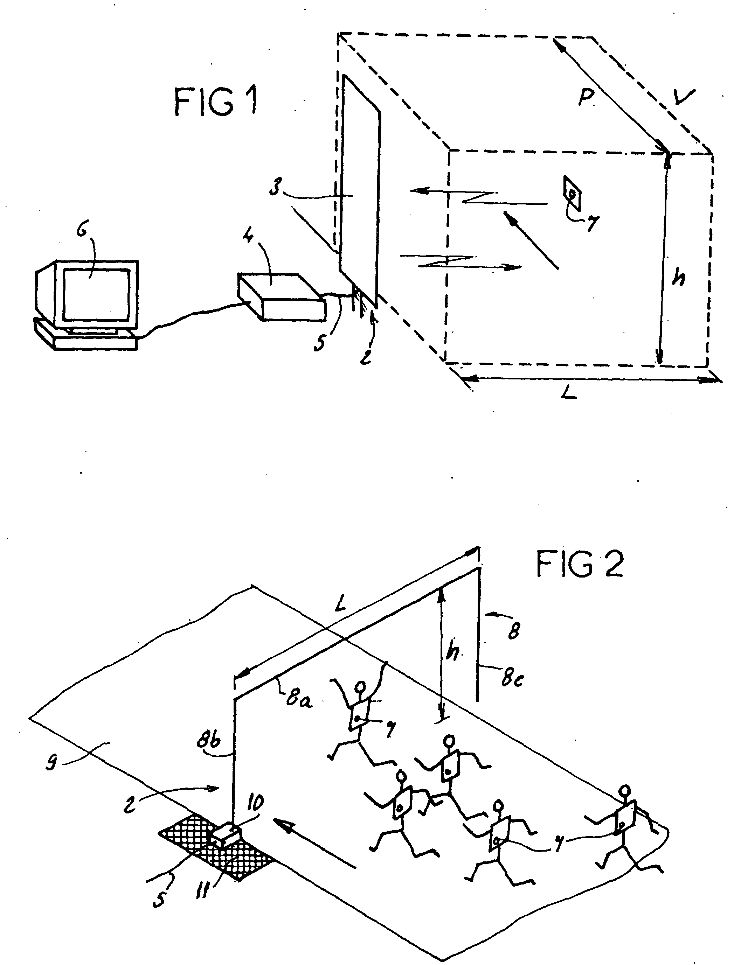

En se référant à la figure 1 du dessin schématique annexé, il est rappelé comment est constitué et fonctionne un tel système d'identification par radio-fréquence. Le dispositif fixe comprend :

- une balise d'émission/réception 2, avec antenne "boucle" 3 ;
- un lecteur 4, qui est connecté par un câble coaxial 5 à la balise 2, et qui génère la fréquence de trafic modulée pour la transmission du code de commande (la fréquence étant ici en pratique de 13,560 MHz, cette valeur étant normalisée) ;
- un ordinateur 6 qui pilote le système grâce à des logiciels de détection, d'acquisition et de gestion des données qui sont véhiculées.

Lorsqu'une étiquette électronique 7 se trouve dans la zone de lecture, c'est-à-dire dans un certain volume V indiqué en pointillés, cette étiquette est alimentée électriquement par l'énergie électromagnétique générée par la balise d'émission/réception 2. La fréquence, générée par cette balise 2, est modulée en amplitude par l'étiquette électronique 7, selon un code propre à cette étiquette 7. La fréquence modulée est reçue par le lecteur 4, par l'intermédiaire de la balise d'émission/réception 2.

Dans le cas d'une antenne "boucle" 3 classique, la balise 2 est en général placée verticalement, sur un côté du volume V, comme le montre la figure 1. Comme il ressort de ce qui précède, le volume V qui est ainsi contrôlé par une antenne "boucle" actuelle reste fortement limité, notamment dans sa largeur L, mais aussi dans sa hauteur h et sa profondeur P.

Toutefois, lorsque le système est appliqué à la détection du passage de personnes, d'animaux ou d'objets de taille importante, les dimensions L, h et P peuvent en pratique avoir les valeurs suivantes :

- la largeur L du passage peut être de plusieurs mètres, et même atteindre dix mètres, voire plus (il s'agit, par exemple, de toute la largeur d'une route) ;
- la hauteur h est typiquement de 2,5 mètres ;
- la profondeur P est liée à la vitesse de déplacement des personnes, animaux ou objets, et elle peut atteindre plusieurs mètres.

C'est donc un volume V particulièrement grand qui est requis pour l'utilisation ici voulue, et les antennes "boucles" classiques, telles que mises en oeuvre par les balises d'émission/réception actuelles, ne peuvent répondre à ce besoin comme déjà expliqué plus haut.

L'invention a donc pour but de fournir des antennes capables de définir des volumes de détection importants, notamment des largeurs de passage importantes, ces antennes pouvant, sans inconvénients, être elles-mêmes de grandes dimensions, tout en conservant une structure simple et économique.

A cet effet, l'invention a essentiellement pour objet une antenne du genre "boucle" constituée d'au moins un fil électriquement conducteur, ayant une configuration générale en "U" renversé se situant dans un plan sensiblement vertical, au-dessus du sol transversalement à un passage, l'antenne formant ainsi une boucle non fermée.

Une telle antenne est constituée par exemple par un fil électriquement conducteur, résultant par exemple de la gaine extérieure d'un câble coaxial, disposé sur un support rigide mais non conducteur, ayant la même configuration en "U" renversé. L'ensemble forme ainsi un genre de portique, pouvant chevaucher une zone dont la largeur est de plusieurs mètres, et correspond à la largeur du passage des porteurs d'étiquettes électroniques à détecter et identifier. La hauteur du passage ainsi défini peut, quant à elle, être de 2,5 mètres, voire plus.

Selon une forme de réalisation particulièrement simple de l'invention, l'antenne du genre "boucle" est constituée d'un fil unique, avec une portion médiane sensiblement horizontale surmontant le passage considéré, et avec deux portions terminales sensiblement verticales, dirigées vers le sol, l'une étant libre et l'autre étant connectée au lecteur d'un système d'identification par radio-fréquence. De préférence, cette connexion, assurant "l'alimentation" de l'antenne, est réalisée par l'intermédiaire d'un circuit d'adaptation, permettant d'adapter l'antenne ainsi constituée à l'impédance caractéristique du câble coaxial de liaison avec le lecteur. Avantageusement, le circuit d'adaptation est constitué d'une impédance bobinée dans l'air et d'un condensateur, l'ensemble étant disposé dans un boîtier métallique, lui-même attaché à un grillage disposé au sol.

Dans une variante, l'une des deux portions terminales, sensiblement verticales, du fil constitutif de cette antenne est raccordée à un grillage disposé au sol, et traversant, sur toute sa largeur, le passage défini par l'antenne.

Selon d'autres formes de réalisation de l'invention, l'antenne est constituée d'un fil principal, comportant une portion sensiblement horizontale et au moins une portion sensiblement verticale connectée au lecteur d'un système d'identification par radio-fréquence, et au moins un fil secondaire qui comporte une portion sensiblement verticale, opposée à celle du fil principal, le fil secondaire ou l'un des fils secondaires étant accolé, sans contact électrique, au fil principal sur une certaine longueur, pour constituer au moins un condensateur.

Diverses structures filaires peuvent ainsi être envisagées, selon la configuration du fil principal et du ou des fils secondaires, et selon l'importance de la zone de superposition des fils principal et secondaire, ces structures s'adaptant à des passages de largeurs plus ou moins importantes.

En effet, la principale difficulté de fonctionnement d'un système de détection par radio-fréquence, dans un volume important, est l'obtention dans ce volume d'un champ magnétique continu et pratiquement constant, sans zones d'annulation du champ, où les étiquettes ne seraient pas détectées. Or lorsque la longueur du fil de l'antenne augmente, notamment au-delà du quart de la longueur d'onde, il peut se produire des "trous" dans le champ magnétique.

Cependant, si l'on introduit un condensateur ou une certaine capacité le long du fil de l'antenne, en série avec ce fil, la capacité étant de valeur bien déterminée et placée en une position judicieuse, l'on peut obtenir un champ magnétique continu et sans points d'annulation, sur toute la surface de la boucle formée par l'antenne. La fonction de la capacité insérée dans l'antenne est ici de ralentir la rotation de phase du courant le long du fil de l'antenne, et d'éviter ainsi toute inversion de phase de ce courant le long du fil.

Les valeurs de capacités à introduire ici, étant de l'ordre de quelques picofarads à quelques dizaines de picofarads, permettent leur réalisation pratique par la simple disposition côte à côte de deux fils, sur une certaine longueur (de quelques décimètres à quelques mètres), le diélectrique du condensateur résultant alors des isolants extérieurs des deux fils juxtaposés. La réalisation obtenue est donc particulièrement simple et économique, tout en procurant un fonctionnement satisfaisant, même pour des antennes du genre "boucle" de grande largeur.

En particulier, à la fréquence utilisée de 13,560 MHz, pour des antennes dont la longueur de fil dépasse le quart d'onde, soit environ 5,6 mètres (pour la fréquence utilisée) il est impératif de recourir à au moins un condensateur, donc de réaliser l'antenne avec un fil principal et au moins un fil secondaire. Pour les antennes dont la longueur de fil dépasse la demi-onde, soit environ 11,2 mètres (pour la fréquence utilisée), deux condensateurs peuvent être introduits, en prévoyant un fil principal, un premier fil secondaire côtoyant le fil principal sur une certaine longueur, à sa première extrémité, et un deuxième fil secondaire côtoyant le premier fil secondaire sur une certaine longueur, à son extrémité opposée. L'on peut ainsi aller jusqu'à des longueurs voisines de la longueur d'onde, soit environ 22 mètres (pour la fréquence utilisée).

De plus, l'introduction d'au moins un tel condensateur dans la structure filaire de l'antenne a pour effet avantageux de diminuer la sensibilité du fil principal en son extrémité libre ; ainsi, lorsqu'une personne, un animal ou un objet s'approche de cette extrémité du fil, l'effet perturbateur sur le courant et en conséquence sur l'impédance d'entrée de l'antenne est largement atténué. Compte tenu de cet avantage, la réalisation décomposée en un fil principal et un fil secondaire peut être utilisée aussi pour des antennes de relativement petite dimension (avec longueur de fil inférieure ou quart d'onde), ceci uniquement pour désensibiliser le fil principal en son extrémité.

Enfin, avec des condensateurs insérés permettant l'obtention de structures filaires de grande longueur, comme expliqué ci-dessus, il devient possible de réaliser aussi des antennes de formes tridimensionnelles, constituées de deux ou plusieurs boucles électriquement en série, se situant dans des plans verticaux notamment parallèles. Le nombre, la position et la valeur des condensateurs insérés sont, dans ce cas, à déterminer de façon à garantir un champ magnétique le plus uniforme possible aux endroits de passage des personnes, animaux ou objets à détecter et identifier. En particulier, une telle antenne peut former deux boucles se succédant, à une certaine distance prédéterminée, sur une voie de passage, en vue de détecter aussi le sens d'avance et/ou la vitesse des personnes, animaux ou objets, porteurs d'étiquettes électroniques.

De toute façon, l'invention sera mieux comprise à l'aide de la description qui suit, en référence au dessin schématique annexé représentant, à titre d'exemples, diverses formes d'exécution de ces antennes du genre "boucle" :

Figure 1 (déjà mentionnée) montre une antenne "boucle" selon l'état de la technique, faisant partie d'un système d'identification par radio-fréquence ;
Figure 2 est une vue en perspective d'une antenne du genre "boucle" conforme à l'invention, dans une forme de réalisation simple ;
Figure 3 est une vue en perspective d'une variante de l'antenne de figure 2 ;
Figures 4, 5, 6 et 7 représentent, en perspective, diverses antennes selon l'invention, avec fil principal et fil secondaire ;
Figure 8 est une vue en perspective d'une autre forme de réalisation de cette antenne, formant une double boucle ;
Figure 9 est une vue de détail, en coupe, faite dans la zone de juxtaposition du fil principal et d'un fil secondaire, dans l'une des antennes précédentes.

En se référant à la figure 2, la balise d'émission/réception, désignée globalement par le repère 2, comprend une antenne du genre "boucle" constituée par un fil unique 8, électriquement conducteur. Situé dans un plan vertical, transversal à une voie de passage 9, le fil 8 possède une portion médiane horizontale 8a, surmontant le passage considéré, et deux portions terminales verticales 8b et 8c, situées respectivement sur les deux côtés de la voie de passage 9. Le fil 8 est maintenu, dans cette configuration de boucle non fermée, par un support rigide électriquement isolant, du genre "portique" (non représenté individuellement).

L'extrémité inférieure de la première portion terminale verticale 8b du fil est reliée à un circuit d'adaptation, avec inductance et condensateur disposés dans un boîtier métallique 10. Ce boîtier 10 est lui-même attaché à un "plan de sol" 11, du type treillis ou grillage, disposé au sol, par exemple d'une longueur de 2 mètres et d'une largeur de 0,5 mètre environ. Un câble coaxial 5 relie le boîtier 10 au lecteur (ici non représenté).

L'extrémité inférieure de la deuxième portion terminale 8c du fil 8 est ici simplement libre.

L'antenne, ainsi constituée, possède une largeur L de plusieurs mètres, adaptée à la largeur de la voie de passage 9, et une hauteur h qui peut être de l'ordre de 2,5 mètres. La balise 2, pourvue de cette antenne, permet la détection et l'identification; au moment de leur passage sous ladite balise, de participants à une épreuve sportive avançant sur la voie 9 et porteurs, chacun, d'une étiquette électronique 7.

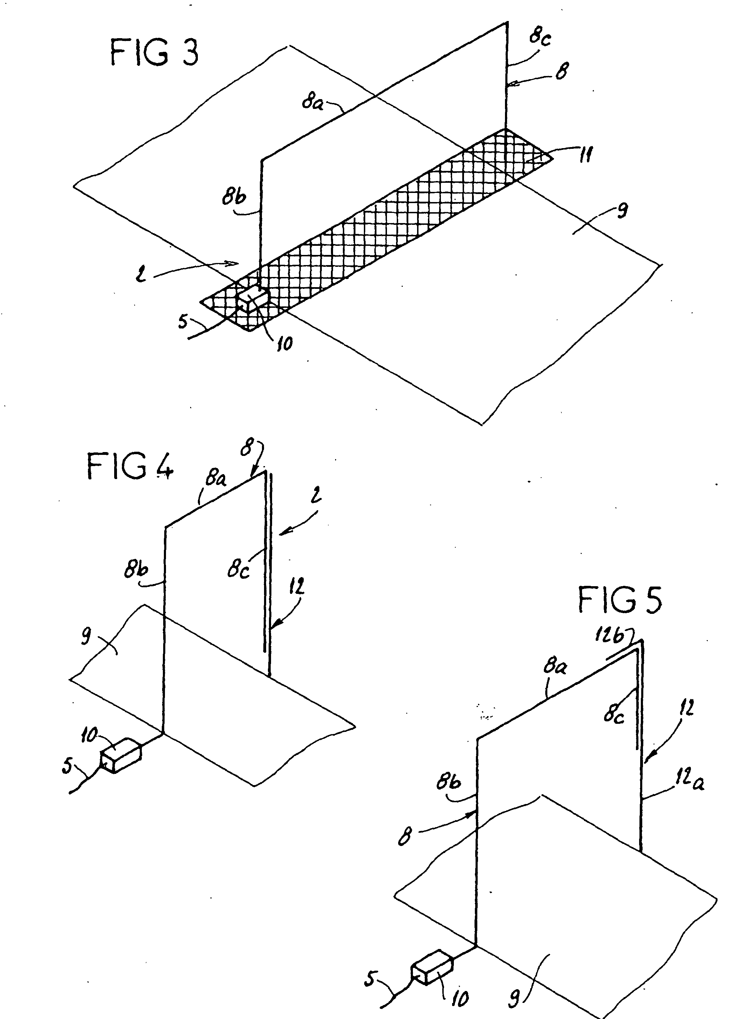

Dans la variante selon la figure 3, l'extrémité inférieure de la deuxième portion terminale 8c du fil 8 est connectée aussi à un "plan de sol" 11, du genre treillis ou grillage, qui traverse ici la voie de passage 9, sur toute sa largeur.

Dans encore une autre variante (non représentée), lorsque l'antenne doit être implantée au dessus d'un sol dont la surface est constituée par de l'eau ou de la neige par exemple, c'est-à-dire lorsque le sol est mauvais conducteur ou n'est pas une surface solide, le treillis ou grillage est remplacé par un câble de retour qui s'étend depuis le boîtier métallique 10 situé au niveau de la portion terminale 8b, jusqu'au voisinage de l'autre portion terminale 8c. Il est également possible de faire chevaucher l'extrémité libre du câble avec la portion terminale 8c pour réaliser un condensateur entre l'extrémité libre du câble et cette portion terminale.

Les figures 4 et suivantes représentent diverses antennes, de plus ou moins grande largeur, dont la structure filaire comprend un fil principal 8 et un fil secondaire 12.

Dans le cas de la figure 4, le fil principal 8 possède, comme dans les exemples précédents, une portion médiane horizontale 8a, une première portion terminale verticale 8b reliée à un circuit d'adaptation avec boîtier 10, et une deuxième portion terminale 8c qui est libre. Le fil secondaire 12, qui est un fil libre, s'étend ici verticalement en étant accolé à la deuxième portion terminale 8c du fil principal 8. Dans leur zone de juxtaposition, les deux fils 8 et 12 forment, ensemble, un condensateur de capacité prédéterminée.

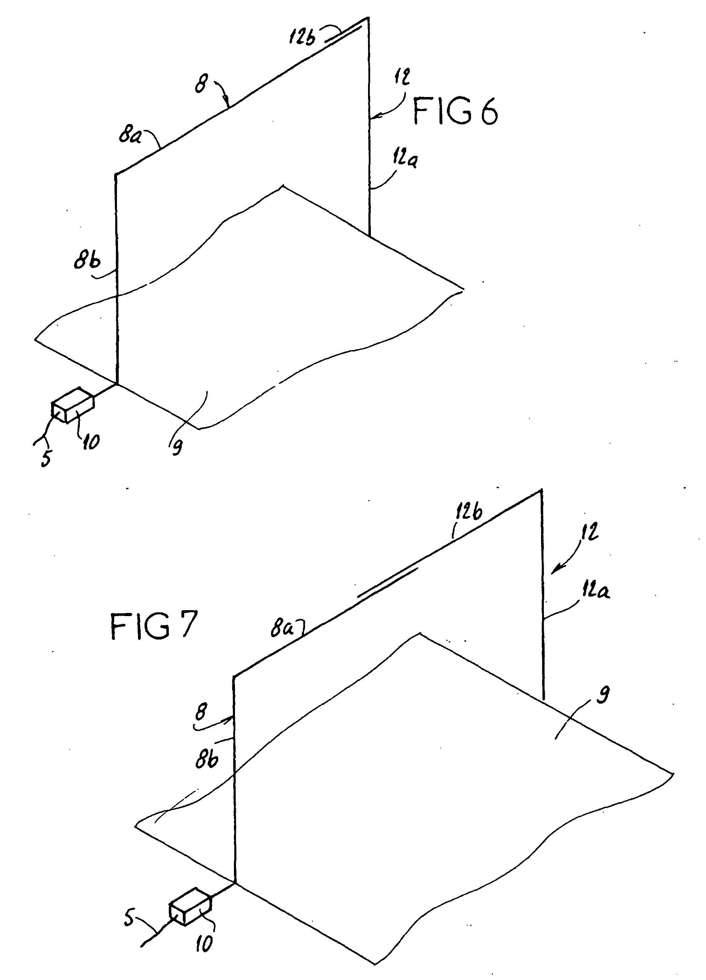

Dans le cas de la figure 5, le fil principal 8 possède une deuxième portion terminale 8c raccourcie, tandis que le fil secondaire 12 possède une portion verticale 12a prolongée, à son sommet, par une portion horizontale 12b, côtoyant une fraction de la portion médiane 8a du fil principal 8. Dans leur zone de juxtaposition (ici de forme coudée), les deux fils 8 et 12 forment toujours un condensateur.

Dans le cas de la figure 6, le fil principal 8 possède une portion médiane horizontale 8a, s'étendant sur toute la largeur de la boucle, et une unique portion terminale verticale 8b, la deuxième portion terminale verticale étant ici entièrement supprimée. Le fil secondaire 12 possède, comme dans le cas précédent, une portion verticale 12a prolongée par une portion horizontale 12b, qui se superpose à une fraction de la portion horizontale 8a du fil principal 8.

Dans le cas de la figure 7, le fil principal 8 possède une unique portion terminale verticale 8b, et sa portion médiane horizontale 8a s'interrompt sensiblement à mi-largeur de l'antenne. Le fil secondaire 12 possède une portion verticale 12a, prolongée par une portion horizontale 12b qui s'étend jusqu'à mi-largeur de l'antenne, en chevauchant sur une certaine longueur la portion horizontale 8a du fil principal 8.

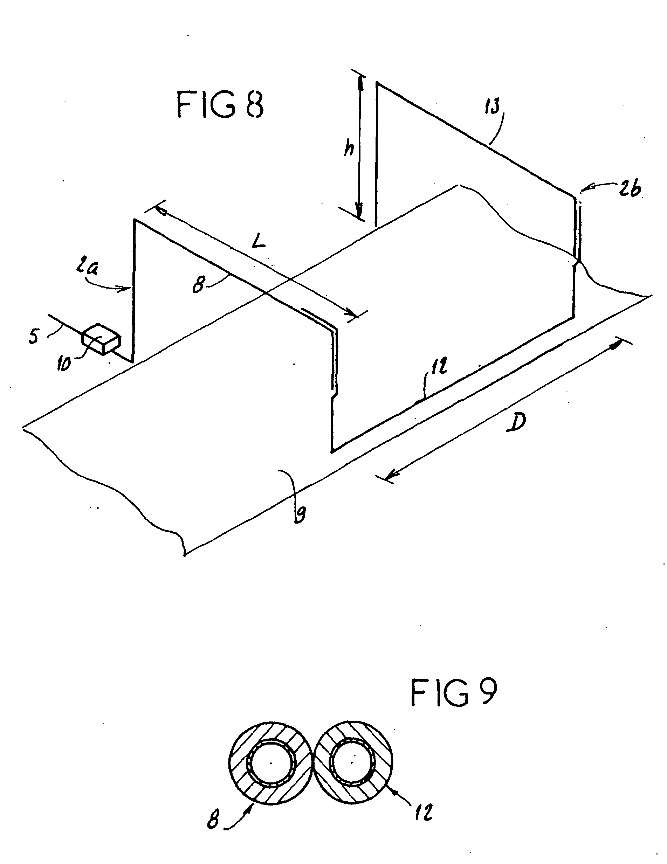

Dans toutes les réalisations d'antennes du genre "boucle" des figures 4 à 7, la zone de chevauchement du fil principal 8 et du fil secondaire 12 constitue un condensateur, comme le montre plus en détail la figure 9. Les tronçons respectifs des deux fils 8 et 12, disposés côte à côte, sont en contact par leurs isolants extérieurs protecteurs respectifs, pleins mais de préférence souples, qui réalisent le diélectrique du condensateur. On obtient ainsi une capacité linéique de l'ordre de 5 à 7 picofarads pour 10 cm. La figure 8 montre aussi que les parties conductrices des deux fils 8 et 12 sont, de préférence, des conducteurs de faible épaisseur, tels que des tresses métalliques, choisis ici en raison de leur souplesse.

Grâce à cette capacité insérée dans la structure filaire, l'on évite, en particulier pour les antennes de grande largeur L, tout "trou" dans le champ magnétique. De plus, même pour les antennes de largeur plus réduite, telles que celles montrées aux figures 3 et 4, cette capacité permet au moins de désensibiliser l'extrémité libre du fil principal 8.

Dans encore une autre variante, il est possible dans les antennes représentées aux figures 4 à 7, d'implanter le boîtier métallique 10 dans la portion médiane horizontale 8a. Les extrémités des portions verticales sont ainsi libres et peuvent donc être situées au dessus de l'eau par exemple.

Comme le montre enfin la figure 8, il est possible de réaliser des antennes avec structure filaire possédant une longueur totale encore plus importante, en combinant un fil principal 8, un premier fil secondaire 12 côtoyant le fil principal 8 à sa première extrémité, et un deuxième fil secondaire 13 côtoyant le premier fil secondaire 12 à son extrémité opposée. Plus particulièrement, on peut ainsi obtenir une structure filaire tridimensionnelle, l'antenne étant dédoublée avec une première boucle 2a et une deuxième boucle 2b, situées dans des plans verticaux parallèles entre eux, transversaux à la voie de passage 9 et séparés (suivant la direction longitudinale de cette voie de passage 9) par une certaine distance D. La double antenne 2a, 2b ainsi réalisée permet de discriminer le sens de passage des porteurs d'étiquettes électroniques, et/ou de déterminer leur vitesse par mesure du temps de parcours entre les plans respectifs des deux boucles, séparés par la distance connue D. Dans des variantes non représentées, mais découlant de cette dernière forme de réalisation, il est aussi possible d'avoir deux boucles situées dans des plans non plus parallèles, mais perpendiculaires l'un à l'autre, pour détecter des étiquettes électroniques de toutes orientations. Plus généralement, ce dernier type d'antenne permet de créer des champs magnétiques selon tout ou partie des trois axes principaux de l'espace.

Il est également possible de réaliser les condensateurs avec des capacités variables pour adapter l'antenne au milieu dans lequel élle est implantée.

Bien entendu, l'invention ne se limite pas aux seules formes d'exécution de ces antennes du genre "boucle" qui ont été décrites ci-dessus, à titre d'exemples ; elle en embrasse, au contraire, toutes les variantes de réalisation et d'application respectant le même principe. C'est ainsi, notamment, que l'on ne s'éloignerait pas du cadre de l'invention par des modifications des détails constructifs des antennes, ou par une réalisation de celles-ci en toutes dimensions, ou encore par une utilisation de ces antennes pour la détection et l'identification de tous genres de porteurs d'étiquettes électroniques : personnes, animaux, objets plus ou moins volumineux...

**Revendications**

1. Antenne du genre "boucle", utilisable comme balise d'émission/réception (2) notamment dans un système d'identification de type radio-fréquence, **caractérisée en ce qu'**elle possède une configuration générale en "U" renversé se situant dans un plan sensiblement vertical, au-dessus du sol (9) transversalement à un passage, l'antenne formant ainsi une boucle non fermée.

2. Antenne du genre "boucle" selon la revendication 1, **caractérisée en ce qu'**elle est constituée d'un fil unique (8), avec une portion médiane (8a) sensiblement horizontale surmontant le passage (9), et avec deux portions terminales (8b, 8c) sensiblement verticales, dirigées vers le bas, l'une (8c) étant libre et l'autre (8b) étant connectée au lecteur (4) d'un système d'identification par radio-fréquence.

3. Antenne du genre "boucle" selon la revendication 2, **caractérisée en ce que** la connexion de la portion verticale (8b) du fil (8) au lecteur (4) est réalisée par l'intermédiaire d'un circuit d'adaptation (10).

4. Antenne du genre "boucle" selon la revendication 3, **caractérisée en ce que** le circuit d'adaptation est constitué d'une impédance bobinée dans l'air et d'un condensateur, l'ensemble étant disposé dans un boîtier métallique (10), lui-même attaché à un grillage (11) disposé au sol.

**5.** Antenne du genre "boucle" selon la revendication 4, **caractérisée en ce que** l'une des deux portions terminales (8b, 8c), sensiblement verticales, du fil (8) constitutif de cette antenne est raccordée à un grillage (11) disposé au sol, et traversant, sur toute sa largeur, le passage (9) défini par l'antenne.

**6.** Antenne du genre "boucle" selon la revendication 3, **caractérisée en ce que** le circuit d'adaptation est constitué d'une impédance bobinée dans l'air et d'un condensateur, l'ensemble étant disposé dans un boîtier métallique (10) lui-même raccordé à un câble de retour qui s'étend jusqu'au voisinage de la portion terminale (8c).

**7.** Antenne du genre "boucle" selon la revendication 6, **caractérisée en ce que** le câble de retour chevauche la portion terminale (8c) pour constituer avec celle-ci une condensateur.

**8.** Antenne du genre "boucle" selon la revendication 1, **caractérisée en ce qu'**elle est constituée d'un fil principal (8), comportant une portion sensiblement horizontale (8a) et au moins une portion sensiblement verticale (8b, 8c) connectée au lecteur (4) d'un système d'identification par radio-fréquence, et au moins un fil secondaire (12, 13) qui comporte une portion verticale (12a), opposée à celle (8b) du fil principal (8), le fil secondaire (12) ou l'un des fils secondaires (12, 13) étant accolé, sans contact électrique, au fil principal (8) sur une certaine longueur, pour constituer au moins un condensateur.

**9.** Antenne du genre "boucle" selon la révendication 8, **caractérisée en ce qu'**elle est une antenne tridimensionnelle, constituée de deux ou plusieurs boucles (2a, 2b) électriquement en série, se situant dans des plans verticaux notamment parallèles.

**10.** Antenne du genre "boucle" selon l'une quelconque de revendications 1 à 9, **caractérisée par** son utilisation dans un système détectant le passage de personnes, d'animaux ou d'objets, portant individuellement des étiquettes électroniques (7) qui permettent leur identification au moment de ce passage.

**Claims**

**1.** "Loop" type antenna which can be used as a transmission/reception beacon (2) particularly in an identification system of the radio-frequency type, **characterised in that** it has an overall inverted "U" configuration lying in a substantially vertical plane above the ground (9), transversely to a passage, the antenna thus forming an unclosed loop.

**2.** "Loop" type antenna according to Claim 1, **characterised in that** it consists of a single wire (9) with a substantially horizontal median portion (8a) lying over the passage (9), with two substantially vertical end portions (8b, 8c) directed downwards, one (8c) being free and the other (8b) being connected to the reader (4) of a radio-frequency identification system.

**3.** "Loop" type antenna according to Claim 2, **characterised in that** the vertical portion (8b) of the wire (8) is connected to the reader (4) by means of a matching circuit (10).

**4.** "Loop" type antenna according to Claim 3, **characterised in that** the matching circuit consists of an impedance wound in air and a capacitor, these being arranged together in a metal casing (10) itself attached to a mesh (11) arranged on the ground.

**5.** "Loop" type antenna according to Claim 4, **characterised in that** one of the two substantially vertical end portions (8b, 8c) of the wire (8) constituting this antenna is connected to a mesh (11), which is arranged on the ground and crosses the passage (9) defined by the antenna over its entire width.

**6.** "Loop" type antenna according to Claim 3, **characterised in that** the matching circuit consists of an impedance wound in air and a capacitor, these being arranged together in a metal casing (10) itself connected to a return cable which extends as far as the vicinity of the end portion (8c).

**7.** "Loop" type antenna according to Claim 6, **characterised in that** the return cable overlaps the end portion (8c) in order to form a capacitor with it.

**8.** "Loop" type antenna according to Claim 1, **characterised in that** it consists of a main wire (8), having a substantially horizontal portion (8a) and at least one substantially vertical portion (8b, 8c) connected to the reader (4) of a radio-frequency identification system, and at least one secondary wire (12, 13) which has a vertical portion (12a) on the opposite side from that (8b) of the main wire (8), the secondary wire (12) or one of the secondary wires (12, 13) being joined without electrical contact to the main wire (8) over a certain length, in order to form at least one capacitor.

9. "Loop" type antenna according to Claim 8, **characterised in that** it is a three-dimensional antenna, consisting of two or more loops (2a, 2b) electrically in series which lie in vertical planes, in particular parallel vertical planes.

10. "Loop" type antenna according to any one of Claims 1 to 9, **characterised by** its use in a system for detecting the passage of people, animals or objects individually bearing electronic tags (7) which make it possible to identify them at the moment when they pass.

**Patentansprüche**

1. "Schleifen"-Antenne, die als Sende/Empfangs-Stelle (2) insbesondere in einem Radiofrequenz-Identifikationssystem verwendbar ist, **dadurch gekennzeichnet, dass** sie einen allgemeinen Aufbau in Form eines umgekehrten "U" besitzt, das sich in einer im wesentlichen vertikalen Ebene oberhalb des Bodens (9) in Querrichtung zu einem Durchgang befindet, wodurch die Antenne eine nicht-geschlossene Schleife bildet.

2. "Schleifen"-Antenne nach Anspruch 1, **dadurch gekennzeichnet, dass** sie aus einem einzigen Draht (8) gebildet ist, mit einem sich oberhalb des Durchgangs (9) im wesentlichen horizontal erstreckenden mittleren Abschnitt (8a) sowie zwei nach unten gerichteten, sich im wesentlichen vertikal erstreckenden Ringabschnitten (8b, 8c), von denen der eine (8c) frei ist und der andere (8b) mit dem Lesegerät (4) eines Radiofrequenz-Identifikationsgeräts verbunden ist.

3. "Schleifen"-Antenne nach Anspruch 2, **dadurch gekennzeichnet, dass** die Verbindung des vertikalen Abschnitts (8b) des Drahtes (8) mit dem Lesegerät (4) über eine Anpassungsschaltung (10) erfolgt.

4. "Schleifen"-Antenne nach Anspruch 3, **dadurch gekennzeichnet, dass** die Anpassungsschaltung aus einer in der Luft gewickelten Impedanz und einem Kondensator besteht, die allesamt in einem Metallgehäuse (10) angeordnet sind, das wiederum an einem am Boden angeordneten Gitter (11) befestigt ist.

5. "Schleifen"-Antenne nach Anspruch 4, **dadurch gekennzeichnet, dass** einer der beiden im wesentlichen vertikalen Abschnitte (8b, 8c) des diese Antenne bildenden Drahtes (8) an ein am Boden angeordnetes Gitter (11) angeschlossen ist, das den durch die Antenne bestimmten Durchgang (9) über seine gesamte Breite überquert.

6. "Schleifen"-Antenne nach Anspruch 3, **dadurch gekennzeichnet, dass** die Anpassungsschaltung aus einer in der Luft gewickelten Impedanz und einem Kondensator gebildet ist, die allesamt in einem Metallgehäuse (10) angeordnet sind, das wiederum an ein Rückleitungskabel angeschlossen ist, das sich bis in die Nähe des Endabschnitts (8c) erstreckt.

7. "Schleifen"-Antenne nach Anspruch 6, **dadurch gekennzeichnet, dass** das Rückleitungskabel mit dem Endabschnitt (8c) überlappt, um mit diesem einem Kondensator zu bilden.

8. "Schleifen"-Antenne nach Anspruch 1, **dadurch gekennzeichnet, dass** sie aus einem Hauptdraht (8) gebildet ist mit einem im wesentlichen horizontalen Abschnitt (8a) und mindestens einem im wesentlichen vertikalen Abschnitt (8b, 8c), der mit dem Lesegerät (4) eines Radiofrequenz-Identifikationssystems verbunden ist, und mit mindestens einem sekundären Draht (12, 13), der einen dem vertikalen Abschnitt (8b) des Hauptdrahtes (8) gegenüberliegenden vertikalen Abschnitt (12a) aufweist, wobei der sekundäre Draht (12) oder einer der sekundären Drähte (12, 13) ohne elektrischen Kontakt über eine gewisse Länge an dem Hauptdraht (8) aufgehängt ist, um mindestens einen Kondensator zu bilden.

9. "Schleifen"-Antenne nach Anspruch 8, **dadurch gekennzeichnet, dass** sie eine dreidimensionale Antenne ist, die aus zwei oder mehreren elektrisch in Serie geschalteten Schleifen (2a, 2b) gebildet ist, die sich in im wesentlichen parallelen vertikalen Ebenen befinden.

**10.** "Schleifen"-Antenne nach einem der Ansprüche 1 bis 9, **gekennzeichnet durch** ihre Verwendung in einem System, welches den Durchgang von Personen, Tieren oder Gegenständen erfasst, die individuell elektronische Etiketten (7) tragen, die ihre Identifikation zum Zeitpunkt dieses Durchgangs gestatten.

FIG 1

FIG 2

FIG 3

FIG 4

FIG 5

FIG 6

FIG 7

FIG 8

FIG 9